# EUROPEAN PATENT APPLICATION

(11) **EP 1 884 861 A1**
(43) Date of publication of application: **06.02.2008**
(21) Application number: 06117730.9
(22) Date of filing: 24.07.2006
(51) Int. Cl.: G06F 1/16

(54) **Portable apparatus with thumb control interface**

(71) Applicant: Dialogue Technology Corp., Jungshing Rd., Shindian (TW)
(72) Inventor: Lee, Jack, Taipei (TW)
(74) Representative: Viering, Jentschura & Partner

(57) **Abstract**

A portable apparatus with thumb control interface includes a host, a display panel and a thumb control interface. The thumb control interface includes a set of control buttons located on the host, and the user's one thumb can touch and control the set of control buttons when a user holds the host. The set of control buttons includes a left mouse button; a middle mouse button; and a right mouse button. A pointer, a scroll wheel and a plurality of function keys are also set on the host, and the users another thumb can touch and control them when the user holds the host.

## Description

### BACKGROUND OF THE INVENTION

### 1. FIELD OF THE INVENTION

The present invention relates to the portable apparatus, and more especially, to the portable apparatus with thumb control interface.

### 2. BACKGROUND OF THE RELATED ART

With the functions of the portable apparatus are becoming more advanced, it is very convenient to work with portable apparatus anywhere anytime. In general, the portable apparatus with lifting cover contains a host, a display panel and a keyboard. In the mobile environment, the simple and direct operation is requested, and because the keyboard is not operated easily, it is a trouble to control the regular portable apparatus not placed on a table.

Although there is a conventional tablet PC operated directly by using a touch pad without troubling about the keyboard, touching the touch pad by a finger or a touch pen will shelter some portion of the screen and influence the user's control. Furthermore, the usage of the tablet PC is not fit for the user who is used to operate the keyboard.

According to the foregoing troubles, a thumb control interface is provided to apply to the portable apparatus with lifting cover.

### SUMMARY OF THE INVENTION

One of objects of this invention is to provide a portable apparatus with thumb control interface, the user may hold the portable apparatus by both hands and use the portable apparatus by operating the thumb control interface, which has the advantages of convenience and simplicity in the mobile operation.

One of objects of this invention is to provide a portable apparatus with thumb control interface, the thumb control interface contains all functions of a general mouse and when the user holds the portable apparatus by both hands, he may control the operation of the portable apparatus to effectively solve the trouble that the keyboard is not easily used in the movement.

Accordingly, one embodiment of the present invention provides a portable apparatus with thumb control interface, including a host; a display panel configured to the host and the display panel can be opened and closed; a keyboard configured on the host, a first holding area and a second holding area are set on two opposite sides of the host between the keyboard and the display panel respectively, and a user's both hands can hold the host through holding the first holding area and the second holding area; and a thumb control interface includes: a set of control bottoms set on the first holding area of the host and operated by the user's one thumb when the user holds the host; a pointer set on the second holding area of the host and operated by the user's another thumb when the user holds the host; and a scroll wheel set on the host beside the pointer.

### BRIEF DESCRIPTION OF THE DRAWINGS

FIG.1 is a diagram illustrating a portable apparatus with thumb control interface in accordance with an embodiment of the present invention; and
FIG.2 is a diagram illustrating the operation in accordance with one embodiment of the present invention.

### DETAILED DESCRIPTION OF THE INVENTION

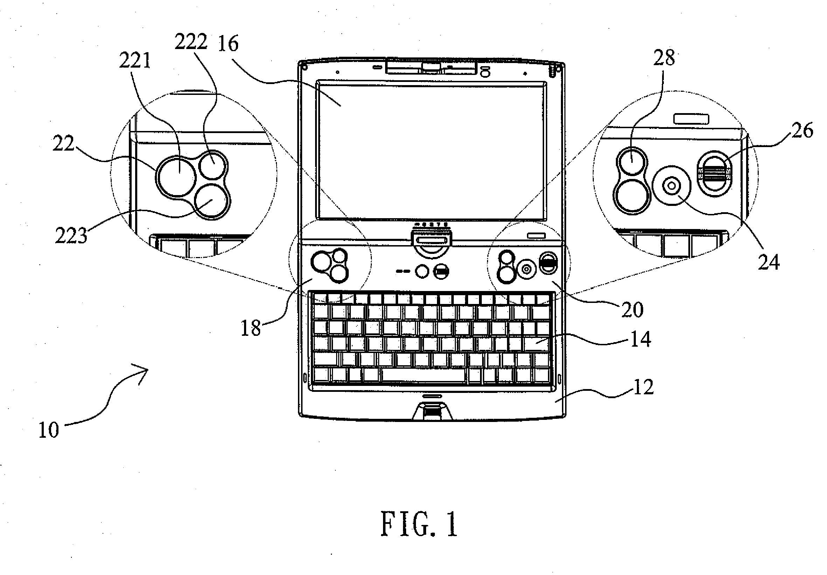

FIG.1 is a diagram illustrating a portable apparatus with thumb control interface, in accordance with an embodiment of the present invention. In this embodiment, a portable apparatus is a notebook 10 including a host 12, a display panel 16 and a thumb control interface. A keyboard 14 is configured to the host 12 for operation, and the display panel 16 is configured to a side of the host 12 and it may be opened and closed. The surface of the host 12 between the display panel 16 and the keyboard 14 has an appropriate area for holding by user's both hands and it is defined as a first holding area and a second holding area. The first holding area is also named left-hand holding area 18 and the second holding area is also named right-hand holding area 20. The thumb control interface includes a set of control bottoms 22, a pointer 24, a scroll wheel 26 and two definable function keys 28.

Wherein the set of control bottoms 22 is set on the left-hand holding area 18 of the host 12 and includes a left mouse button 221, a middle mouse button 222 and a right mouse button 223, and their functions are equivalent to the general mouse buttons. The pointer 24 is a track ball set on the right-hand holding area 20 of the host 12, and the scroll wheel 26 is set beside the pointer 24 to scroll the screen up and down. Two function keys 28 are also set on the right-hand holding area 20 of the host 12, and the user may use the build-in utility of the notebook 10 to assign the function to every function key 28 as a shortcut.

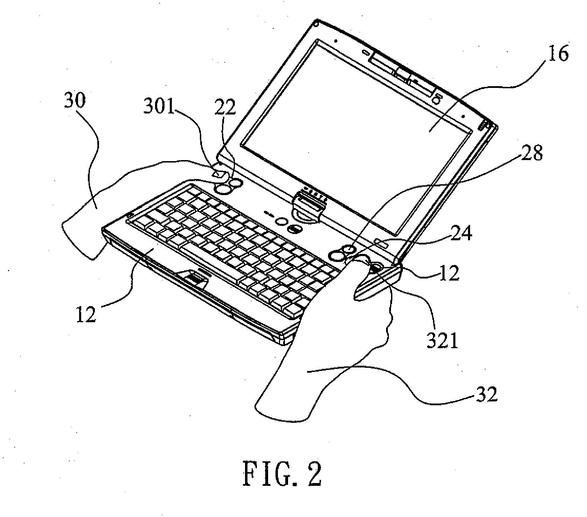

Furthermore, referring to FIG.2, when the user holds the host 12 with his both hands 30,32, the left thumb 301 may operate the set of control bottoms 22 and the right thumb 321 can operate the pointer 24 exactly to control the mouse cursor or operate the scroll wheel 26 to scroll the screen up and down, browse document or zoom in and zoom out the image. Besides, the right thumb 321 can press the function keys 28 to perform the website searching, execute preset applications, or control the speaker volume.

Wherein, the pointer 24 can be a joystick or a touch pad. The set of control bottoms 22 is not limited to be set on left-hand holding area 18, it can be changed to set on the right-hand holding area 20 according to the user's habit. The pointer 24, the scroll wheel 26, and the function keys 28 are also not limited to be set on the right-hand holding area 20, and their locations can be changed in any position of the controllable areas of user's thumbs 301, 321.

In the present invention, when the user can not place the notebook on the table in the mobile environment, he can hold the host by both hands and operate the set of control bottoms, pointer, scroll wheel and function keys by both thumbs to use the notebook. The foregoing thumb control interface almost contains all the functions of a general mouse, therefore users can control the notebook partially or completely at any condition to effectively solve the trouble that the keyboard is not easily used in the movement, which has the advantages of convenience and simplicity in the mobile operation.

Although the present invention has been explained in relation to its preferred embodiment, it is to be understood that other modifications and variation can be made without departing the spirit and scope of the invention as hereafter claimed.

## Claims

1. A portable apparatus with thumb control interface, comprising:
a host ;
a display panel configured to said host, wherein said display panel is set opened and closed;
a keyboard configured on said host, wherein a first holding area and a second holding area are set on the two opposite sides of said host between said keyboard and said display panel respectively, and a user's both hands can hold said host through holding said first holding area and said second holding area ; and
a thumb control interface including:
a set of control bottoms set on said first holding area of said host and operated by said user's one thumb when the user holds said host;
a pointer set on said second holding area of said host and operated by the user's another thumb when said user holds said host; and
a scroll wheel set on said host beside said pointer.

2. The portable apparatus with thumb control interface according to claim 1, wherein said set of control bottoms includes a left mouse button and a right mouse button.

3. The portable apparatus with thumb control interface according to claim 2, wherein said set of control bottoms further includes a middle mouse button.

4. The portable apparatus with thumb control interface according to claim 1; wherein at least one definable function key set on at least one of said first holding area and said second holding area.

5. The portable apparatus with thumb control interface according to claim 1, wherein said pointer is a track ball.

6. The portable apparatus with thumb control interface according to claim 1, wherein said pointer is a joystick.

7. The portable apparatus with thumb control interface according to claim 1, wherein said pointer is a touch pad.

8. A thumb control interface set on a holdable area of a portable apparatus to enable a user's both hands to hold said portable apparatus through holding said holdable area, said thumb control interface comprising:
a set of control bottoms including a left mouse button and a right mouse button set on said holdable area and operated by the user's one thumb when the user holds said portable apparatus;
a pointer set on said holdable area and operated by the user's another thumb when the user holds said portable apparatus to control the cursor of said portable apparatus; and
a scroll wheel set beside said pointer.

9. The thumb control interface according to claim 8, wherein said set of control bottoms includes a middle mouse button.

10. The thumb control interface according to claim 8, wherein at least one definable function key is set beside said pointer.

11. The thumb control interface according to claim 8, wherein said pointer is a track ball.

12. The thumb control interface according to claim 8, wherein said pointer is a joystick.

13. The thumb control interface according to claim 8, wherein said pointer is a touch pad.
